# FASCICULE DE BREVET EUROPEEN

(11) **EP 1 650 420 B1**
(45) Date de publication et mention de la délivrance du brevet: **10.01.2007**
(21) Numéro de dépôt: 05300835.5
(22) Date de dépôt: 18.10.2005
(51) Int. Cl.: F02D 41/02, F02D 41/40, F01N 3/08, F01N 3/20, F02D 41/14, F01N 3/023

(54) **Système et procédé de régularisation de la régénération d'un filtre à particules de moteur à combustion interne**
Vorrichtung und Verfahren zur Regelung der Partikelfilterregeneration einer Brennkraftmaschine
System and method for regulation of the particulate filter regeneration of an internal combustion engine

(30) Priorité: 20.10.2004 FR 0411151
(43) Date de publication de la demande: 26.04.2006
(73) Titulaire: Renault s.a.s., 92100 Boulogne Billancourt (FR)
(72) Inventeur: Daneau, Marc, 92100 Boulogne Billancourt (FR); Dufay, Eric, 91760 Itteville (FR); Dauphin, Nicolas, 80000 Amiens (FR)

(56) Documents cités:
- EP-A- 1 387 071
- DE-A1- 10 108 182
- DE-A1- 10 303 085
- PATENT ABSTRACTS OF JAPAN vol. 2003, no. 12, 5 décembre 2003 (2003-12-05) & JP 2004 162633 A (MAZDA MOTOR CORP), 10 juin 2004 (2004-06-10)

## Description

La présente invention concerne, d'une manière générale, la régulation d'une phase de régénération d'un filtre à particules par combustion des particules accumulées dans le filtre, ledit filtre étant monté sur la ligne d'échappement d'un moteur à combustion interne et notamment d'un moteur Diesel, et associé à un dispositif catalyseur d'oxydation, monté également sur la ligne d'échappement, en amont du filtre à particules.

Les moteurs à combustion interne, et plus particulièrement les moteurs de type Diesel, rejettent dans l'atmosphère des particules polluantes dont il convient de diminuer la quantité. Ces particules, qui sont constituées de suies produites lors d'une combustion imparfaite dans le moteur, peuvent être piégées dans les gaz d'échappement par l'implantation d'un filtre à particules dans la ligne d'échappement en aval des chambres de combustion du moteur. Un tel filtre est conçu de façon à pouvoir retenir les particules se trouvant dans les gaz d'échappement qui traversent le filtre. Au fur et à mesure de l'utilisation du moteur, les particules s'accumulent dans le filtre et finissent par entraîner une contre-pression importante à l'échappement du moteur, ce qui diminue considérablement ses performances.

Afin de rétablir les performances du moteur, on sait pratiquer une régénération du filtre par combustion des particules qui s'y sont accumulées. Cette opération de combustion est rendue possible par une élévation de la température interne du filtre à particules. Pour ce faire, on procède généralement à une injection retardée de carburant dans les chambres de combustion du moteur. On peut en particulier injecter du carburant juste après le point mort haut lors de la phase de détente, ce qui a pour effet d'augmenter la température des gaz à l'échappement. Il est également possible de prévoir une ou plusieurs injections tardives, c'est-à-dire nettement après le point mort haut. Le carburant ainsi injecté ne brûle pas dans la chambre de combustion du moteur, mais dans le dispositif catalytique également prévu dans la ligne d'échappement, augmentant ainsi la température des gaz traversant ensuite le filtre à particules.

Le filtre à particules est en effet généralement associé à un dispositif catalyseur monté en amont du filtre, de façon à diminuer les émissions polluantes. Les hydrocarbures imbrûlés et l'oxyde de carbone provenant des injections retardées et des injections tardives dans les chambres de combustion, sont oxydés dans le dispositif catalyseur en augmentant la température des gaz traversant ensuite le filtre à particules.

La régénération du filtre à particules peut être faite périodiquement au cours de phases de régénération, dès que la quantité de particules dans le filtre devient trop importante. Les phases de régénération s'effectuent lorsque le moteur fonctionne, sans que le conducteur du véhicule en ait conscience.

Il est nécessaire de réguler avec précision les modalités d'injection de carburant pendant les phases de régénération, afin d'éviter que la combustion des particules s'emballe et entraîne une augmentation excessive de la température des gaz d'échappement, pouvant aboutir à une détérioration du filtre à particules.

La demande de brevet allemand DE 100 33 159 (DAIMLER) ou la demande de brevet japonais JP 2003/65035 (TOYOTA), décrivent des systèmes de régulation utilisant un capteur de température capable de mesurer la température en amont du filtre à particules. La régulation de l'injection est faite, dans ces dispositifs connus, en modifiant la quantité et/ou le retard des injections de carburant dans le moteur, de façon à maintenir la température en entrée du filtre à particules la plus proche possible d'une température de consigne déterminée. Cette température de consigne est suffisamment élevée pour permettre la régénération du filtre à particules et reste cependant assez basse pour que le filtre ne puisse pas être détérioré. De cette manière, la régulation tend à éviter les risques d'emballement de la réaction lors des phases de régénération du filtre.

La demande de brevet français 2 804 168 (PSA) décrit un filtre à particules associé à un dispositif catalyseur et comportant plusieurs capteurs de température. La régulation pendant la phase de régénération est faite essentiellement en tenant compte de la température mesurée immédiatement en aval du dispositif catalytique, afin d'éviter le dépassement d'un seuil de sécurité au-delà duquel le catalyseur pourrait se trouver dégradé. Ce document est muet sur la protection du filtre à particules lui-même.

La demande de brevet français 2 802 972 (RENAULT) est du même type que les précédentes, en ce qui concerne la régulation en vue d'une protection du filtre à particules. Dans cette demande de brevet, se trouve essentiellement décrit un dispositif permettant d'activer le processus de régénération par une mesure de température et de pression en aval du filtre à particules.

Dans tous ces documents antérieurs, il apparaît qu'on contrôle l'apport en température en amont du filtre à particules en prévoyant uniquement une régulation de l'injection de carburant dans le moteur en fonction de la température mesurée en amont du filtre à particules.

Une telle régulation ne donne cependant pas totalement satisfaction. En effet, elle ne permet pas de tenir compte des apports en hydrocarbures, en oxyde de carbone, en oxygène, ou en air présent dans les gaz d'échappement lors des phases de régénération. Or, ces constituants, lorsqu'ils traversent le dispositif catalyseur à température élevée, s'oxydent en dégageant de la chaleur.

Tous ces éléments participent à l'élévation de température des gaz d'échappement qui traversent ensuite le filtre à particules et peuvent par conséquent entraîner une détérioration du filtre sans qu'un dispositif de régulation de type connu, recevant uniquement le signal de mesure de la température en amont du filtre, ait eu le temps d'agir.

La présente invention a pour objet un système de régulation et un procédé de régulation pour les phases de régénération d'un filtre à particules, qui permettent de tenir compte de l'ensemble des paramètres susceptibles d'élever la température des gaz traversant le filtre pendant la phase de régénération.

La présente invention a en particulier pour objet un système de régulation qui tienne compte de l'effet des apports en hydrocarbures, en oxyde de carbone, en oxygène et en suies, ainsi que du débit interne d'air dans le dispositif catalyseur.

La présente invention a encore pour objet un tel système, dans lequel on tient compte pour la régulation, de l'apport thermique résultant de l'ensemble des réactions de combustion et/ou d'oxydation se déroulant dans le dispositif catalyseur, pendant la phase de régénération.

Dans un mode de réalisation, le système de régulation à un filtre à particules qui peut être régénéré par combustion des particules accumulées dans le filtre, au cours d'une phase de régénération. Le filtre est monté sur la ligne d'échappement d'un moteur à combustion interne, notamment un moteur Diesel, et associé à un dispositif catalyseur d'oxydation monté sur la ligne d'échappement, en amont du filtre à particules. Le système comprend un capteur de température monté sur la ligne d'échappement entre le dispositif catalyseur et le filtre à particules et un dispositif de régulation de l'injection de carburant dans le moteur en fonction de l'écart entre une température de consigne prédéterminée et la température en amont du filtre à particules. Le système comprend en outre un moyen pour déterminer la température interne du dispositif catalyseur pendant la phase de régénération et un moyen pour modifier la régulation de l'injection de carburant dans le moteur en fonction de l'écart entre une température de consigne prédéterminée et la température interne du dispositif catalyseur.

La régulation de l'injection pendant les phases de régénération du filtre à particules est donc modifiée en fonction de l'effet produit sur le dispositif catalyseur par les apports en hydrocarbures imbrûlés, en oxyde de carbone CO ou encore en oxygène restant dans les gaz d'échappement, dont la quantité dépend du débit d'air.

Dans un mode de réalisation, le moyen pour déterminer la température interne du dispositif catalyseur comprend un capteur de température monté sur la ligne d'échappement en amont du dispositif catalyseur. Ledit moyen reçoit également le signal du capteur de température monté sur la ligne d'échappement entre le dispositif catalyseur et le filtre à particules.

Dans un autre mode de réalisation, le moyen pour déterminer la température interne du dispositif catalyseur comprend un dispositif d'estimation de la température en amont du catalyseur, comportant un modèle du fonctionnement du dispositif catalyseur en phase de régénération. Là encore, ledit moyen de détermination de la température interne reçoit le signal du capteur de température monté sur la ligne d'échappement entre le dispositif catalyseur et le filtre à particules.

Dans tous les cas, la régulation de l'injection est faite de préférence par une modification de la quantité de carburant injecté et/ou du retard de l'injection, par rapport au fonctionnement du moteur en dehors des phases de régénération du filtre à particules.

Un tel système de régulation peut être utilisé avantageusement dans un moteur Diesel équipé d'un turbocompresseur et d'un moyen de réinjection d'une partie des gaz d'échappement à l'admission.

Le moteur Diesel peut comporter une rampe commune d'admission à haute pression ou un dispositif d'injection directe.

L'invention concerne également un procédé de régulation d'une phase de régénération d'un filtre à particules par combustion des particules accumulées dans le filtre, ledit filtre étant monté sur la ligne d'échappement d'un moteur à combustion interne, notamment un moteur Diesel, et associé à un dispositif catalyseur d'oxydation monté sur la ligne d'échappement, en amont du filtre à particules. Pendant la phase de régénération, on régule l'injection de carburant dans le moteur en fonction de l'écart entre une température de consigne prédéterminée et la température en amont du filtre à particules. De plus, pendant toute la phase de régénération, on modifie la régulation de l'injection de carburant dans le moteur en fonction de l'écart entre une température de consigne prédéterminée et la température interne du dispositif catalyseur.

L'invention sera mieux comprise à l'étude d'un mode de réalisation pris à titre d'exemple nullement limitatif et illustré par les dessins annexés, sur lesquels :
- la figure 1 représente schématiquement les principaux éléments d'admission et d'échappement d'un moteur à combustion interne équipé d'un filtre à particules et d'un dispositif catalyseur dans la ligne d'échappement ; et
- la figure 2 montre schématiquement les principaux éléments d'un dispositif de régulation selon l'invention.

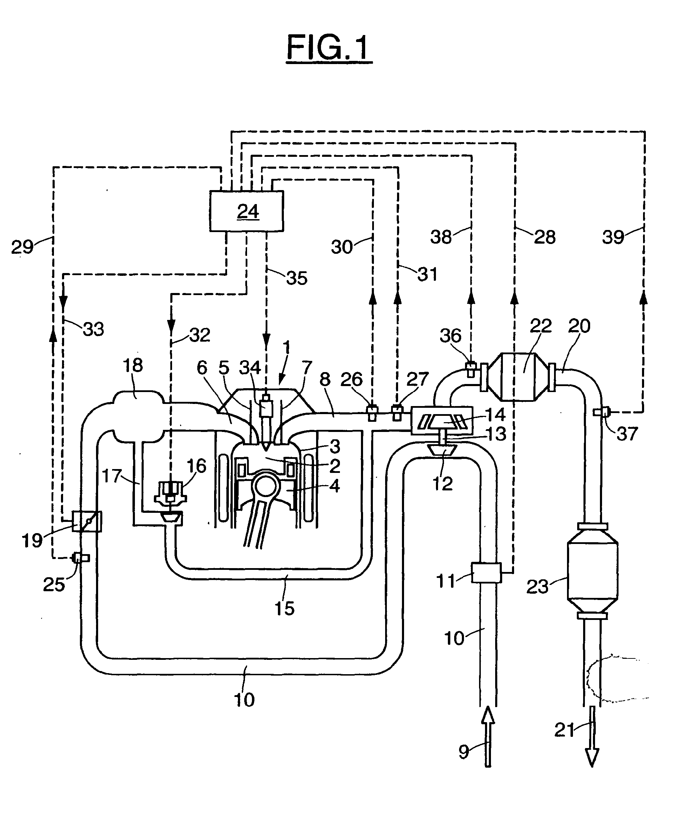

Tel qu'il est illustré sur la figure 1, le moteur à combustion interne 1, représenté schématiquement, comprend une pluralité de chambres de combustion, telles que la chambre de combustion 2 illustrée sur la figure dans la partie haute d'un cylindre 3 à l'intérieur duquel se déplace un piston 4. Une soupape d'admission 5 permet de commander l'admission en ouvrant ou obturant le conduit d'admission 6, en communication avec la chambre de combustion 2. Une soupape d'échappement 7 permet, quant à elle, d'obturer ou d'ouvrir le passage des gaz d'échappement en provenance de la chambre de combustion 2 vers le conduit d'échappement 8.

L'air frais à la pression atmosphérique, dont le flux est symbolisé par la flèche 9, pénètre dans une conduite 10 à l'intérieur de laquelle se trouve monté un débitmètre 11. La pression de l'air est augmentée par un compresseur 12 monté dans la conduite 10. Le compresseur est monté sur un arbre 13 commun à une turbine 14, ici à géométrie variable, montée dans le conduit d'échappement 8. Les gaz d'échappement traversant la turbine 14 entraînent ainsi le compresseur 12, de façon à augmenter la pression de l'air admis dans la chambre de combustion 2 par le conduit d'admission 6.

Dans l'exemple illustré, le moteur 1 comprend en outre un système de réinjection partielle des gaz d'échappement à l'admission (EGR). A cet effet, une conduite de dérivation 15 est piquée sur la conduite d'échappement 8 en amont de la turbine 14. Une vanne de régulation 16, dite « vanne EGR », commande la quantité de gaz d'échappement qui sont ainsi réinjectés par la conduite 17 dans le conduit d'admission 6 après avoir été convenablement mélangés dans la chambre de mélange 18. Un volet d'orientation réglable 19 est en outre monté dans la conduite d'air comprimé 10 en aval du compresseur 12 et en amont de la chambre de mélange 18.

La ligne d'échappement 20 relie la sortie de la turbine 14 à l'atmosphère, la sortie des gaz d'échappement étant symbolisée par la flèche 21. Dans la ligne d'échappement 20, se trouvent montés un dispositif catalyseur 22 directement en aval de la turbine 14, et un filtre à particules 23 en aval du dispositif catalytique 22. Le filtre à particules 23 est de type classique et comporte des moyens, par exemple électrostatiques, pour piéger les suies et les particules provenant du moteur 1 et véhiculées par les gaz d'échappement dans la ligne d'échappement 20.

Une unité électronique de commande 24 assure le fonctionnement du moteur 1 et reçoit à cet effet un certain nombre d'informations. Différents capteurs sont placés à cet effet dans les conduites et leurs signaux sont amenés sur l'unité électronique de commande 24.

Sur la figure 1, on a représenté notamment un capteur de pression 25 sur la conduite d'amenée d'air 10, monté en amont du volet 19. On a représenté également un capteur de pression 26 capable de mesurer la pression en amont de la turbine 14 et un capteur de température 27 mesurant la température en amont de la turbine 14.

Le signal de mesure du débitmètre 11 est amené par la connexion 28 à l'une des entrées de l'unité électronique de commande 24. De la même façon, le signal émis par le capteur de pression 25 est amené par la connexion 29 sur l'unité électronique de commande 24. Les signaux émis par les capteurs 26 et 27 sont également amenés par les connexions 30 et 31 sur des entrées de l'unité électronique de commande 24.

L'unité électronique de commande 24 peut commander notamment la position de la vanne EGR 16 par la connexion 32, la position du volet mobile 19 par la connexion 33. L'unité électronique de commande pilote également les injecteurs de carburant 34 par la connexion 35.

Pour la régulation pendant la phase de régénération du filtre à particules 23, le système, tel qu'il est illustré sur la figure 20, comprend un capteur de température 36 monté dans la ligne d'échappement 20, en amont du dispositif catalyseur 22 et un capteur de température 37 monté dans la ligne d'échappement 20, en aval du dispositif catalyseur 22, c'est-à-dire également, en amont du filtre à particules 23. Le signal de température mesurée par le capteur 36 est amené par la connexion 38 sur l'une des entrées de l'unité électronique de commande 24. Le signal de température mesurée par le capteur 37 est amené par la connexion 39 sur une autre entrée de l'unité électronique de commande 24.

L'unité électronique 24 est capable, à partir de ces deux signaux provenant des capteurs 36 et 37, de déterminer la température interne du dispositif catalyseur 22 pendant les phases de régénération, par exemple en effectuant un calcul de moyenne.

Dans un autre mode de réalisation, le capteur 36 peut être remplacé par un dispositif d'estimation qui comprend un modèle mathématique du fonctionnement du dispositif catalyseur 22 en phase de régénération et qui est ainsi capable de déterminer la température interne du dispositif catalyseur 22 en fonction des données sur les éléments entrant dans le dispositif catalyseur 22. Le système comprend alors différents capteurs de mesure des débits des différents constituants entrant dans le dispositif catalyseur, tels que hydrocarbures, oxyde de carbone, oxygène, air, etc.

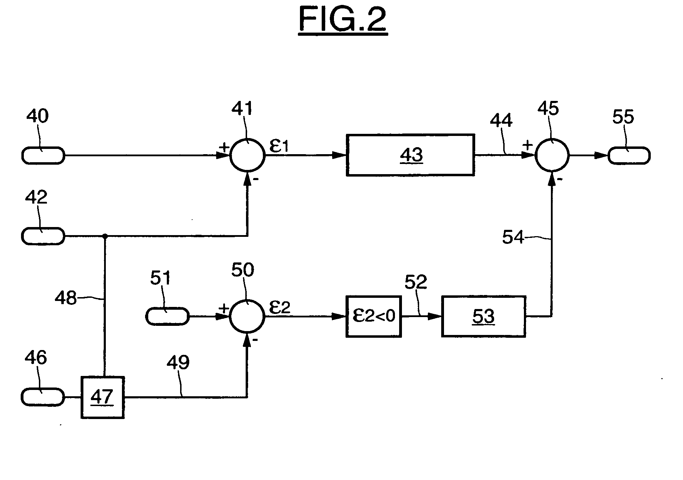

La figure 2 illustre très schématiquement les principaux éléments contenus dans l'unité électronique de commande 24 pour la régulation de l'injection pendant une phase de régénération. Sur le bloc 40, est amenée une température de consigne pour le filtre à particules 23 qui provient par exemple d'une valeur prédéterminée mémorisée dans l'unité électronique de commande 24. Le signal correspondant est amené sur une entrée positive d'un sommateur 41. La température des gaz d'échappement mesurée dans la ligne d'échappement en amont du filtre à particules par le capteur 37 est amenée sur le bloc 42 dont la sortie est connectée à l'entrée négative du sommateur 41. Le sommateur 41 génère un écart ε₁ entre la température de consigne 40 et la température mesurée 42 en amont du filtre à particules 23. Cet écart ε₁ est amené à l'entrée d'un dispositif de régulation 43, qui peut être par exemple un régulateur du type proportionnel intégral dérivée (PID) qui délivre sur sa sortie 44 un signal qui est amené à une entrée positive d'un sommateur 45.

Le signal issu du régulateur 43 est modifié pendant la phase de régénération, conformément à l'invention, par les moyens suivants. Sur le bloc 46, est amenée une température de consigne correspondant à la température maximale admissible dans le dispositif catalyseur 22. Cette température de consigne provient par exemple d'une valeur prédéterminée mémorisée dans l'unité électronique de commande 24. Cette valeur de consigne issue du bloc 46 est amenée à l'une des entrées d'un dispositif de calcul de température interne référencé 47, lequel reçoit également sur une deuxième entrée, par la connexion 48, la température mesurée par le capteur 37, c'est-à-dire la température qui règne dans la ligne d'échappement entre le dispositif catalyseur 22 et le filtre à particules 23. Cette valeur de température est issue du bloc 42.

En sortie du dispositif de calcul de température interne 47, apparaît un signal sur la connexion 49, qui correspond à la température interne du dispositif catalyseur 22. Ce signal est amené sur une entrée négative d'un sommateur 50. Le sommateur 50 reçoit également sur une entrée positive, une valeur de consigne amenée sur le bloc 51 et correspondant à la température maximale admissible pour le dispositif catalyseur 22. Cette valeur de consigne est par exemple une valeur prédéterminée mémorisée dans l'unité électronique de commande 24.

Le sommateur 50 génère un écart ε₂ entre la température de consigne 51 et la température interne du dispositif catalyseur 22. Cet écart ε₂ est amené sur un comparateur 51 qui détermine si l'écart ε₂ est positif ou négatif. Si l'écart ε₂ est négatif, c'est-à-dire si la température interne du catalyseur telle que déterminée par le dispositif de calcul 47, est supérieure à la température maximale admissible dans le catalyseur, qui provient du bloc 51, un signal est délivré sur la connexion 52 en sortie du comparateur 51. Ce signal est amené à l'entrée d'un régulateur 53, capable d'émettre sur sa sortie 54 un signal qui est amené à une entrée négative du sommateur 45. Il en résulte, à la sortie 55 du dispositif de régulation, une modification de la régulation des quantités injectées et des retards à l'injection par rapport au signal émis par le régulateur 43.

La régulation de l'injection se trouve ainsi modifiée en tenant compte de la température interne du dispositif catalyseur 22.

Grâce à la présente invention, il devient possible de protéger efficacement le filtre à particules, en évitant les risques de détérioration dus à une température excessive pendant les phases de régénération, en raison par exemple d'un emballement des réactions d'oxydation à l'intérieur du dispositif catalyseur associé au filtre à particules.

## Revendications

1. Système de régulation d'une phase de régénération d'un filtre à particules (23) par combustion des particules accumulées dans le filtre, ledit filtre étant monté sur la ligne d'échappement d'un moteur à combustion interne, notamment un moteur Diesel, et associé à un dispositif catalyseur d'oxydation (22) monté sur la ligne d'échappement, en amont du filtre à particules, comprenant un capteur de température (37) monté sur la ligne d'échappement entre le dispositif catalyseur et le filtre à particules et un dispositif de régulation de l'injection de carburant dans le moteur en fonction de l'écart entre une température de consigne prédéterminée et la température en amont du filtre à particules, **caractérisé par le fait qu'**il comprend en outre un moyen pour déterminer la température interne du dispositif catalyseur pendant la phase de régénération et un moyen pour modifier la régulation de l'injection de carburant dans le moteur en fonction de l'écart entre une température de consigne prédéterminée et la température interne du dispositif catalyseur.

2. Système de régulation selon la revendication 1, **caractérisé par le fait que** le moyen pour déterminer la température interne du dispositif catalyseur comprend un capteur de température (36) monté sur la ligne d'échappement en amont du dispositif catalyseur (22) et reçoit le signal du capteur de température (37) monté sur la ligne d'échappement entre le dispositif catalyseur et le filtre à particules.

3. Système de régulation selon la revendication 1, **caractérisé par le fait que** le moyen pour déterminer la température interne du dispositif catalyseur comprend un dispositif d'estimation de la température en amont du catalyseur, comportant un modèle du fonctionnement du dispositif catalyseur en phase de régénération et reçoit le signal du capteur de température (37) monté sur la ligne d'échappement entre le dispositif catalyseur et le filtre à particules.

4. Système de régulation selon l'une quelconque des revendications précédentes, **caractérisé par le fait que** la régulation de l'injection est faite par une modification de la quantité de carburant injecté et/ou du retard de l'injection, par rapport au fonctionnement du moteur en dehors des phases de régénération du filtre à particules.

5. Utilisation d'un système de régulation selon l'une quelconque des revendications précédentes dans un moteur Diesel équipé d'un turbocompresseur (12, 14) et d'un moyen (15, 16) de réinjection d'une partie des gaz d'échappement à l'admission.

6. Utilisation selon la revendication 7 dans un moteur Diesel comportant une rampe commune d'admission à haute pression.

7. Utilisation selon la revendication 7 dans un moteur Diesel comportant un dispositif d'injection directe.

8. Procédé de régulation d'une phase de régénération d'un filtre à particules par combustion des particules accumulées dans le filtre, ledit filtre étant monté sur la ligne d'échappement d'un moteur à combustion interne, notamment un moteur Diesel, et associé à un dispositif catalyseur d'oxydation monté sur la ligne d'échappement, en amont du filtre à particules, dans lequel, pendant la phase de régénération, on régule l'injection de carburant dans le moteur en fonction de l'écart entre une température de consigne prédéterminée et la température en amont du filtre à particules, **caractérisé par le fait que**, pendant toute la phase de régénération, on modifie la régulation de l'injection de carburant dans le moteur en fonction de l'écart entre une température de consigne prédéterminée et la température interne du dispositif catalyseur.

## Claims

1. System for regulating a regeneration phase of a particulate filter (23) by combustion of the particles accumulated in the filter, the said filter being mounted on the exhaust line of an internal combustion engine, particularly a diesel engine, and associated with an oxidation catalyst device (22) mounted on the exhaust line, upstream of the particulate filter, comprising a temperature sensor (37) mounted on the exhaust line between the catalytic device and the particulate filter and a device for regulating the fuel injection into the engine according to the difference between a predefined temperature setpoint and the temperature upstream of the particulate filter, **characterized in that** it further comprises means for determining the internal temperature of the catalytic device during the regeneration phase and means for modifying the regulation of the fuel injection into the engine according to the difference between a predefined temperature setpoint and the internal temperature of the catalytic device.

2. Regulating system according to Claim 1, **characterized in that** the means for determining the internal temperature of the catalytic device comprise a temperature sensor (36) mounted on the exhaust line upstream of the catalytic device (22) and receives the signal from the temperature sensor (37) mounted on the exhaust line between the catalytic device and the particulate filter.

3. Regulating system according to Claim 1, **characterized in that** the means for determining the internal temperature of the catalytic device comprise a device for estimating the temperature upstream of the catalyst, comprising an operating model of the catalytic device in the regeneration phase, and receives the signal from the temperature sensor (37) mounted on the exhaust line between the catalytic device and the particulate filter.

4. Regulating system according to any one of the preceding claims, **characterized in that** the injection is regulated by modifying the quantity of fuel injected and/or the injection lag, relative to the operation of the engine outside the particulate filter regeneration phases.

5. Use of a regulating system according to any one of the preceding claims, in a diesel engine equipped with a turbocharger (12, 14) and with means (15, 16) for reinjecting part of the exhaust gases into the intake.

6. Use according to Claim 7, in a diesel engine comprising a high-pressure common injection rail.

7. Use according to Claim 7, in a diesel engine comprising a direct injection device.

8. Method for regulating a regeneration phase of a particulate filter by combustion of the particles accumulated in the filter, the said filter being mounted on the exhaust line of an internal combustion engine, particularly a diesel engine, and associated with an oxidation catalyst device mounted on the exhaust line, upstream of the particulate filter, in which, during the regeneration phase, the fuel injection into the engine is regulated according to the difference between a predefined temperature setpoint and the temperature upstream of the particulate filter, **characterized in that**, throughout the regeneration phase, the regulation of the fuel injection into the engine is modified according to the difference between a predefined temperature setpoint and the internal temperature of the catalytic device.

## Patentansprüche

1. Regulierungssystem einer Regenerationsphase eines Partikelfilters (23) durch Verbrennung der Partikel, die sich im Filter angesammelt haben, wobei der Filter auf der Auspuffleitung eines Verbrennungsmotors, insbesondere eines Dieselmotors, angebracht und mit einer Oxidationskatalysatorvorrichtung (22) verbunden ist, die auf der Auspuffleitung oberhalb des Partikelfilters angebracht ist, umfassend einen Temperatursensor (37), der auf der Auspuffleitung zwischen der Katalysatorvorrichtung und dem Partikelfilter und einer Vorrichtung zur Regulierung der Kraftstoffeinspritzung in den Motor in Abhängigkeit vom Abstand zwischen einer vorbestimmten Solltemperatur und der Temperatur oberhalb des Partikelfilters angebracht ist, **gekennzeichnet durch** die Tatsache, dass es zudem ein Mittel umfasst, um die innere Temperatur der Katalysatorvorrichtung während der Regenerationsphase zu bestimmen und ein Mittel, um die Regulierung der Kraftstoffeinspritzung in den Motor in Abhängigkeit vom Abstand zwischen einer vorbestimmten Solltemperatur und der inneren Temperatur der Katalysatorvorrichtung zu modifizieren.

2. Regulierungssystem nach Anspruch 1, **gekennzeichnet durch** die Tatsache, dass das Mittel zur Bestimmung der inneren Temperatur der Katalysatorvorrichtung einen Temperatursensor (36) umfasst, der auf der Auspuffleitung oberhalb der Katalysatorvorrichtung (22) angebracht ist, und das Signal des Temperatursensors (37) empfängt, der auf der Auspuffleitung zwischen der Katalysatorvorrichtung und dem Partikelfilter angebracht ist.

3. Regulierungssystem nach Anspruch 1, **gekennzeichnet durch** die Tatsache, dass das Mittel zur Bestimmung der inneren Temperatur der Katalysatorvorrichtung eine Vorrichtung zur Bewertung der Temperatur oberhalb des Katalysators umfasst, die ein Modell der Funktion der Katalysatorvorrichtung in der Regenerationsphase umfasst, und das Signal des Temperatursensors (37) empfängt, der auf der Auspuffleitung zwischen der Katalysatorvorrichtung und dem Partikelfilter angebracht ist.

4. Regulierungssystem nach irgendeinem der vorausgehenden Ansprüche, **gekennzeichnet durch** die Tatsache, dass die Regulierung der Einspritzung durch eine Veränderung der eingespritzten Kraftstoffmenge und/oder **durch** die Verzögerung der Einspritzung im Verhältnis zur Funktion des Motors außerhalb der Regenerationsphasen des Partikelfilters erfolgt.

5. Verwendung eines Regulierungssystems nach irgendeinem der vorausgehenden Ansprüche in einem Dieselmotor, der mit einem Turboverdichter (12, 14) und einem Mittel (15, 16) zur Wiedereinspritzung eines Teils der Abgase in den Einlass ausgestattet ist.

6. Verwendung nach Anspruch 7 in einem Dieselmotor, der eine gemeinsame Hochdruckeinlassrampe umfasst.

7. Verwendung nach Anspruch 7 in einem Dieselmotor, der eine Direkteinspritzvorrichtung umfasst.

8. Regulierungsverfahren einer Regenerationsphase eines Partikelfilters durch Verbrennung der Partikel, die sich im Filter angesammelt haben, wobei der Filter auf der Auspuffleitung eines Verbrennungsmotors, insbesondere eines Dieselmotors, angebracht und mit einer Oxidationskatalysatorvorrichtung verbunden ist, die auf der Auspuffleitung oberhalb des Partikelfilters angebracht ist, in dem während der Regenerationsphase die Einspritzung des Kraftstoffs in den Motor in Abhängigkeit vom Abstand zwischen einer vorbestimmten Solltemperatur und der Temperatur oberhalb des Partikelfilters reguliert wird, **gekennzeichnet durch** die Tatsache, dass während der gesamten Regenerationsphase die Regulierung der Kraftstoffeinspritzung in den Motor in Abhängigkeit vom Abstand zwischen einer vorbestimmten Solltemperatur und der inneren Temperatur der Katalysatorvorrichtung modifiziert wird.
